# EUROPÄISCHE PATENTANMELDUNG

(11) **EP 0 901 258 A2**
(43) Veröffentlichungstag der Anmeldung: **10.03.1999**
(21) Anmeldenummer: 98116119.3
(22) Anmeldetag: 26.08.1998
(51) Int. Cl.: H04L 27/233

(54) **Empfänger für Mobilfunksysteme**

(30) Priorität: 02.09.1997 DE 19738360
(71) Anmelder: SIEMENS AKTIENGESELLSCHAFT, 80333 München (DE)
(72) Erfinder: Heinen, Stefan Dr.-Ing., 47802 Krefeld (DE)

(57) **Zusammenfassung**

Empfänger für Mobilfunksysteme in Form eines Low-IF- oder Zero-IF-Empfängers zur Verarbeitung einer Inphase- (I) und einer Quadraturkomponente (Q) eines Empfangssignals mit einem Filter (10) und einem automatischen Schwundausgleich (12), wobei dem automatischen Schwundausgleich (12) eine Koordinatenrotationsstufe (14) nachgeschaltet ist, die aus dem I-Q Koordinatensystem n um 90°/n gedrehte Koordinatensysteme erzeugt, und an die Koordinatenrotationsstufe (14) zwei Komparatoren (16) pro Koordinatensytem angeschlossen sind, die zusammen jeweils eine Information von zwei Bit liefern, die den Quadranten in dem jeweiligen Koordinatensystem angibt, in dem sich die Phase der Eingangssignale (I, Q) befindet, und diese Information in einem digitalen Segmentdekoder (18) ausgewertet wird, dem ein Phasendifferenzdemodulator (20) nachgeschaltet ist, der die aktuelle Segmentinformation mit der oder den Informationen aus früherern Zeitabschnitten vergleicht.

## Beschreibung

Die vorliegende Erfindung betrifft einen Empfänger für Mobilfunksysteme in Form eines Low-IF- oder Zero-IF-Empfängers zur Verarbeitung einer Inphase- und Quadraturkomponente eines Empfangssignals mit einem Filter und einem automatischen Schwundausgleich.

Die vollständige Integration eines Empfängers für Mobilfunksysteme kann durch Realisierung eines Low-IF- oder Zero-IF-Empfängers gelöst werden. Low-IF bedeutet in diesem Zusammenhang, daß die Zwischenfrequenz in der Größenordnung der Modulationsfrequenz liegt, Zero-IF bedeutet, daß keine Zwischenfrequenz verwendet wird.

Dabei ist die Demodulation eines GFSK-modulierten Signals eines der wesentlichen Probleme.

Gemäß dem Stand der Technik wurde dieses Problem durch eine Analog/Digital-Wandlung des Signals nach dem automatischen Schwundausgleich mit anschließender digitaler Signalverarbeitung gelöst. Aufgrund der komplexen digitalen Signalverarbeitung waren solche Schaltungen gemäß dem Stand der Technik sehr aufwendig.

Es ist daher Aufgabe der Erfindung, einen Empfänger für Mobilfunksysteme zu schaffen, bei dem die Demodulation des GFSK-modulierten Signals erheblich einfacher gelöst ist.

Erfindungsgemäß wird diese Aufgabe dadurch gelöst, daß dem automatischen Schwundausgleich (AGC) eine Koordinatenrotationsstufe nachgeschaltet ist, die aus dem I-Q-Koordinatensystem n um 90°/n gedrehte Koordinatensysteme erzeugt, und an die Koordinatenrotationsstufe zwei Komparatoren pro Koordinatensystem angeschlossen sind, die zusammen jeweils eine Information von zwei Bit liefern, die den Quadranten in dem jeweiligen Koordinationsystem angibt, in dem sich die Phase der Eingangssignale (I, Q) befindet, und diese Information in einem digitalen Segmentdekoder ausgewertet wird. Vorzugsweise wird der Segmentdekoder dabei mit einer Taktrate getaktet, die erheblich über der Bit-Rate des zu empfangenden Signals liegt. Vorzugsweise liegt der Wert für n dabei zwischen 8 und 12.

Es empfiehlt sich hier besonders, die Taktrate so zu wählen, daß sie dem neunfachen der Bitrate des zu empfangenden Signals entspricht.

Vorzugsweise wird dem Segmentdekoder ein Phasen-Differenz-Demodulator nachgeschaltet, der die aktuelle Segmentinformation mit der oder den Informationen aus früheren Zeitabschnitten vergleicht.

Debei berechnet der Phasen-Differenz-Demodulator vorzugsweise eine Sektordifferenz zwischen der aktuellen und der vorhergehenden Segmentinformation.

Die vorliegende Erfindung wird im folgenden anhand des in der Zeichnung dargestellten Ausführungsbeispiels näher erläutert. Es zeigt:

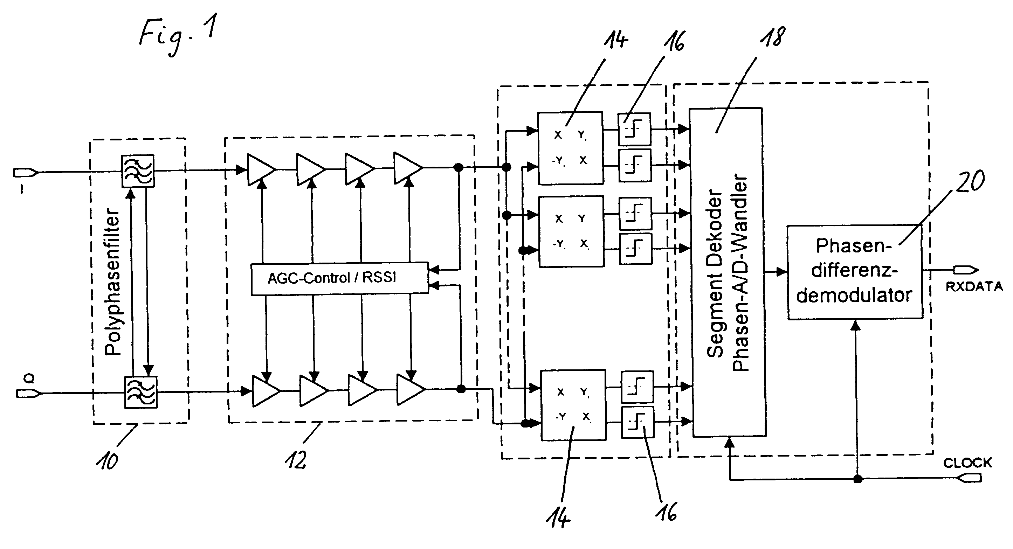

Figur 1 ein Blockschaltbild eines erfindungsgemäßen Empfängers für Mobilfunksysteme.

Fig. 1 zeigt in einem Blockschaltbild die für die vorliegende Erfindung bedeutsamen Teile eines Empfängers für Mobilfunksysteme. Auch bei dem Empfänger gemäß der vorliegenden Erfindung werden die Inphase- und Quadraturkomponenten des Empfangssignals in üblicher Weise erzeugt. Das Blockschaltbild beginnt daher mit den Eingängen für die Inphasekomponente (I) und die Quadraturkomponente (Q). Diese Eingänge führen bei Verwendung der vorliegenden Erfindung in einem Low-IF-System zu einem Polyphasenfilter 10, das einer entsprechenden Kanalfilterung dient. Im Falle eines Zero-IF-Systems ist hier ein Tiefpassfilter einzusetzen.

Vom Polyphasenfilter 10 oder dem entsprechenden Tiefpassfilter wird die Inphasekomponente und die Quadraturkomponente einer AGC-Stufe 12 zugeführt. Es handelt sich dabei um eine Verstärkerstufe mit automatischer Verstärkungsregelung, die dem automatischen Schwundausgleich dient. Dadurch ergibt sich am Ausgang dieser AGC-Stufe 12 ein nahezu konstanter Signalpegel.

An die AGC-Stufe 12 schließt sich eine Koordinatenrotationsstufe 14 an. Diese Koordinatenrotationsstufe 14 generiert aus dem I-Q-Koordinatensystem n um 90°/n gedrehte Koordinatensysteme, d.h., es entstehen 2n Achsen. Vorzugsweise wird n = 8 gewählt, ebenso ist n = 9, 10, 11 oder insbesondere 12 möglich. Der Koordinatenrotationsstufe 14 sind zwei Komparatoren 16 pro Koordinatensystem, also insgesamt 2n Komparatoren 16 nachgeschaltet. Die jeweils zwei Komparatoren 16, die für jedes Koordinatensystem vorgesehen sind, liefern für jedes Koordinatensystem eine in 2-bit kodierte Information über den Quadranten, in dem sich die Phase des Eingangssignals der Empfängerschaltung befindet. Diese Information wird einem nachgeschalteten digitalen Segmentdekoder 18 zugeführt. Der digitale Segmentdekoder wertet diese Information aus, indem er bestimmt, in welchem der 4n Segmente sich die Phase des Eingangssignals befindet. Die Taktrate des Segmentdekoders ist dabei vorzugsweise deutlich höher als die Bitrate des zu empfangenden Signals (in einer besonders bevorzugten Ausführungsform der Erfindung um den Faktor 9). Der Ausgang des Segmentdekoders, der hier als Phasen-Analog/Digital-Wandler wirkt, ist mit einem Phasendifferenzdemodulator 20 verbunden. Dieser Phasendifferenzdemodulator 20 vergleicht die aktuelle Segmentinformation mit den Informationen aus vorhergehenden Takten. Es wird also eine Sektordifferenz gebildet. Die entsprechende Taktung erfolgt durch den von außen zuzuführenden Takt "CLOCK". Durch den Phasendifferenzdemodulator 20 erfolgt also eine analoge Differenziation der Phase nach der Zeit. Die Anzahl der in einer Bezugszeit überstrichenen Sektoren ist direkt proportional der Frequenz des Eingangssignals.

Es ist dabei zu berücksichtigen, daß für ein Low-IF-System die Phase in eine Richtung dreht, wobei die Winkelgeschwindigkeit ein Maß fuhr die Frequenz ist. Die Frequenzmodulation erhöht oder verringert die Rotationsgeschwindigkeit, d.h., die Anzahl der überstrichenen Sektoren ist von dem Modulationsinhalt abhängig. Durch die systemabhängige Wahl einer Entscheidungsschwelle für diese Zahl der überstrichenen Sektor kann dann zwischen 1 und 0 entschieden werden.

Bei einem Zero-IF-System dreht die Phase in Abhängigkeit von der Modulation nach links oder rechts. Aus einer Erkennung der Drehrichtung kann somit direkt digitale Information über den Modulationsinhalt gewonnen werden.

## Patentansprüche

1. Empfänger für Mobilfunksysteme in Form eines Low-IF- oder Zero-IF-Empfängers zur Verarbeitung einer Inphase- (I) und Quadraturkomponente (Q) eines Empfangssignals mit einem Filter (10) und einem automatischen Schwundausgleich (12),
**dadurch gekennzeichnet,**
daß dem automatischen Schwundausgleich (12) eine Koordinatenrotationsstufe (14) nachgeschaltet ist, die aus dem I-Q-Koordinatensystem n um 90°/n gedrehte Koordinatensysteme erzeugt, und an die Koordinatenrotationsstufe (14) 2 Komparatoren (16) pro Koordinatensystem angeschlossen sind, die zusammen jeweils eine Information von 2 bit liefern, die den Quadranten in dem jeweiligen Koordinatensystem angibt, in dem sich die Phase der Eingangssignale (I, Q) befindet, und diese Information in einem digitalen Segment-Dekoder (18) ausgewertet wird.

2. Empfänger nach Anspruch 1,
**dadurch gekennzeichnet,**
daß der Segment-Dekoder (18) mit einer Taktrate, die erheblich über der Bitrate des zu empfangenden Signals liegt, getaktet ist.

3. Empfänger nach Anspruch 2,
**dadurch gekennzeichnet,**
daß die Taktrate dem 9-fachen der Bitrate des zu empfangenden Signals entspricht.

4. Empfänger nach Anspruch 1,2 oder 3,
**dadurch gekennzeichnet,**
daß dem Segment-Dekoder (18) ein Phasendifferenzdemodulator (20) nachgeschaltet ist, der die aktuelle Segmentinformation mit der oder den Informationen aus früheren Zeitabschnitten vergleicht.

5. Empfänger nach Anspruch 4,
**dadurch gekennzeichnet,**
daß der Phasendifferenzdemodulator (20) eine Sektordifferenz zwischen der aktuellen und der vorhergehenden Segmentinformation bildet.
